# FASCICULE DE BREVET EUROPEEN

(11) **EP 1 266 199 B1**
(45) Date de publication et mention de la délivrance du brevet: **02.12.2009**
(21) Numéro de dépôt: 01913979.9
(22) Date de dépôt: 09.03.2001
(51) Int. Cl.: G01M 3/02, G01M 3/26, G01M 13/00, G01N 3/32

(54) **BANC D'ESSAI POUR ORGANES DE CULASSE DE MOTEUR A COMBUSTION INTERNE**
TESTEINRICHTUNG ZUM TESTEN VON BRENNKRAFTMASCHINEN
TEST STAND FOR INTERNAL COMBUSTION ENGINE

(30) Priorité: 10.03.2000 FR 0003075
(43) Date de publication de la demande: 18.12.2002
(73) Titulaire: MONTUPET S.A., F-92110 Clichy (FR); ACE Engineering, 94000 Creteil (FR)
(72) Inventeur: MEYER, Philippe, F-60600 Ronquerolles (FR); GUIMBAL, Frédéric, F-75020 Paris (FR); CHOUARD, Daniel, F-75014 Paris (FR)
(74) Mandataire: Le Forestier, Eric
(86) Numéro de dépôt international: PCT/FR2001/000721
(87) Numéro de publication internationale: WO 2001/069195

(56) Documents cités:
- EP-A- 0 747 687
- US-A- 4 448 065
- US-A- 5 054 314

## Description

La présente invention concerne un banc d'essai pour culasse de moteur à combustion interne ou pour toute pièce située dans son environnement immédiat telle que joint de culasse, vis de fixation..., ledit moteur comportant au moins une chambre de combustion ou de pression. Elle concerne plus particulièrement un tel banc pour organes de culasse comprenant au moins des moyens d'amenée d'un fluide hydraulique dans la chambre de combustion ou de pression, et des moyens de contrôle de la pression de ce fluide de manière à simuler des cycles de pression dans la chambre de combustion ou de pression.

Ces bancs d'essai sont destinés à recevoir soit une culasse de moteur seule, soit une culasse montée sur son bloc moteur. Du fluide hydraulique sous pression est introduit dans les chambres de combustion ou de pression, tandis qu'un fluide caloporteur est amené à circuler dans les conduits de refroidissement de la culasse avec ou sans bloc pour la maintenir à une température de fonctionnement prédéterminée. Les moyens de contrôle de la pression du fluide hydraulique sont agencés pour faire varier cette pression cycliquement de manière à simuler les cycles de fonctionnement du moteur.

On reproduit donc à l'aide d'un tel banc d'essai les conditions de fonctionnement du moteur tant en température dans une ou plusieurs chambres d'eau, qu'en pression dans la chambre de combustion ou de pression. Il est ainsi possible d'étudier son comportement sous contraintes thermiques et mécaniques et sa résistance à la fatigue, et par conséquent d'optimiser sa conception tant en ce qui concerne son dessin que les alliages utilisés , les procédés de moulage et d'usinage ou les traitements thermiques effectués.

De tels bancs d'essai peuvent en outre être utilisés pour étudier le comportement de certaines pièces de l'environnement immédiat de la culasse tels que le joint de culasse, les vis de fixation...

Un banc d'essai du type rappelé ci-dessus est connu par le document EP-A-0 415 857.

Dans ce document, les moyens de contrôle de la pression du fluide hydraulique dans les chambres de combustion ou de pression sont constitués par des pompes d'injection dont les pistons sont animés par des cames entraînées en rotation par un moteur électrique. Le profil d'un cycle de pression est donc principalement déterminé par la forme des cames.

Un tel dispositif donne d'une manière générale satisfaction. Il est toutefois relativement limité du fait que les cycles de pression sont réalisés de façon purement mélanique.

En premier lieu, la durée de chaque cycle ne peut être réduite autant que cela serait souhaitable pour simuler des régimes moteur qui ont sans cesse tendance à augmenter.

La conception des bancs d'essai actuels présente également des limitations en ce qui concerne la pression maximal à atteindre. Or, les pressions maximales dans les chambres de combustion ont tendance à augmenter pour les moteurs diesel.

Engin, le profil du cycle de fonctionnement est figé par la forme des cames. Il ne peut donc ni être réglé avec une grande précision, ni être modifié aisément.

En outre, la maintenance du banc est relativement onéreuse car elle nécessite un changement de l'arbre à cames, généralement après quelques centaines d'heures de fonctionnement. Les cames s'usent en effet rapidement avec le temps, et leur profil se transforme nuisant ainsi à la régularité des cycles de fonctionnement.

Ainsi, le document US 5,455,772 décrit un banc d'essai d'un moteur, comprenant des moyens d'amenée d'un fluide hydraulique dans la chambre de combustion et des moyens de contrôler permettant de commander l'introduction du fluide dans la chambre, lesdits moyens de contrôle comprenant un piston, permettant d'appliquer une différence de pression dans un cylindre du moteur, une valve pour alimenter cette chambre de combustion en pression, et des moyens de commande pour piloter la valve en fonction de l'angle du vilebrequin, la vitesse de rotation du moteur et la mesure de la position du piston.

En outre, le document EP0 747 687 A2 divulgue un autre banc d'essai.

La présente invention vise à pallier ces inconvénients.

Plus particulièrement, l'invention a pour but de fournir un banc d'essai de fatigue de culasses seules ou de culasses montées sur un bloc moteur, qui permet de reproduire plus fidèlement les cycles de pressions sur une culasse d'un moteur à combustion interne à la température de fonctionnement du circuit de refroidissement.

L'invention a également pour but de fournir un tel banc d'essai pouvant atteindre des fréquences de fonctionnement et des pressions plus élevées.

L'invention a également pour but de fournir un tel banc d'essai dont la maintenance est plus facile et moins onéreuse que celle des bancs d'essai existants.

A cet effet, l'invention a pour objet un banc d'essai d'après la revendication 1.

On observera en premier lieu que l'on entend ici, notamment dans les revendications, par organes de culasse non seulement la culasse elle-même, mais également toutes les pièces figurant dans son environnement immédiat. Le banc d'essai selon l'invention peut en effet être utilisé pour tester aussi bien de telles pièces que la culasse elle-même.

Par ailleurs, on entend par électrovanne tout dispositif, également dénommé servovalve ou servovanne, permettant de relier, et plus particulièrement de mettre en communication, de façon contrôlée une source de fluide sous pression disposée en amont du dispositif avec un circuit d'utilisation situé en aval, de manière à contrôler la pression dans ce circuit d'utilisation. Une telle électrovanne possède généralement deux chambres et un tiroir commandé de manière à mettre en relation selon sa position une des chambres avec un circuit d'alimentation à haute pression et l'autre chambre avec un circuit de retour de fluide à basse pression, l'une des chambres étant entre outre reliée au circuit d'utilisation.

On notera que l'on inclut dans les dispositifs de ce type les pulsateurs, dans lesquels la source de pression n'est pas directement mise en communication avec le circuit d'utilisation, mais lui est reliée fonctionnellement par l'intermédiaire d'un piston vibrateur lui-même commandé par une électrovanne.

Dans le banc d'essai selon l'invention, la pression du fluide hydraulique dans les chambres de combustion ou de pression est donc pilotée par des électrovannes alimentées à partir d'une source de fluide à haute pression. Il n'est donc plus nécessaire de prévoir de pompe d'injection tournant à grande vitesse pour simuler des régimes moteur élevés. Seules les électrovannes doivent posséder une dynamique élevée.

Par ailleurs, il est plus facile d'atteindre les pressions élevées qui sont actuellement réclamées.

En outre, le profil d'un cycle de pression peut être fixé arbitrairement par l'évolution de la pression de consigne, et modifié sans aucune intervention mécanique par simple modification du programme de pilotage du banc d'essai.

Enfin, les cames de l'art antérieur sont supprimées, ce qui a pour résultat non seulement de réduire les coûts de maintenance du banc, mais également d'assurer une meilleure reproductibilité du cycle de fonctionnement.

Dans un mode de réalisation particulier de l'invention, le banc d'essai comprend des moyens pour créer une première fuite calibrée dans chaque chambre de combustion ou de pression, ladite fuite étant agencée pour mettre en forme le signal détecté par ledit capteur de pression.

Plus particulièrement, lesdits moyens pour créer une première fuite calibrée dans chaque chambre de combustion ou de pression peuvent comprendre une restriction de débit entre la chambre de combustion ou de pression et un circuit de retour de fluide hydraulique.

Cette fuite, située au point haut du circuit, assure également une fonction de purge de l'air résiduel.

Encore plus particulièrement, ladite restriction de débit entre la chambre de combustion ou de pression et le circuit de retour de fluide hydraulique peur être montée dans la culasse à l'emplacement d'un injecteur de carburant ou d'une bougie.

Egalement dans un mode de réalisation particulier de l'invention, des moyens sont prévus pour créer une deuxième fuite calibrée pour chaque chambre de combustion ou de pression, ladite fuite étant agencée pour régler le gradient de pression dans la chambre de combustion ou de pression lors des phases de décompression des cycles de pression.

Plus particulièrement, lesdits moyens pour créer une deuxième fuite calibrée dans chaque chambre de combustion ou de pression peuvent comprendre un conduit calibré entre une chambre de l'électrovanne et un circuit de retour de fluide hydraulique.

Encore plus particulièrement, ledit conduit calibré peut être formé dans ledit bloc hydraulique.

Egalement dans un mode de réalisation particulier de l'invention, le banc d'essai comprend un circuit de chasse du fluide hydraulique depuis chaque chambre de combustion ou de pression.

Ce circuit de chasse permet de purger les circuits et les chambres de combustion ou de pression à intervalles de temps choisis, de manière à entraîner vers le circuit de retour les impuretés contenues dans le fluide hydraulique. Ces impuretés, venant de la dégradation de la culasse et/ou du joint de culasse, sont ensuite filtrées avant recyclage du fluide hydraulique au niveau de la source à haute pression.

Le circuit de chasse du fluide hydraulique peut notamment comprendre des moyens pour créer une dépression dans la chambre de combustion ou de pression afin d'ajuster le gradient de pression dans la phase de décompression.

Plus particulièrement, les moyens pour créer une dépression peuvent comprendre un conduit de chasse entre la chambre de combustion ou de pression et un circuit de retour de fluide hydraulique.

Ce conduit de chasse peut être formé dans ledit bloc hydraulique.

Dans un mode de réalisation particulier, le conduit de chasse comporte une canalisation de fluide entre une chambre de l'électrovanne et un circuit de retour de fluide hydraulique, une électrovanne de chasse, et un raccord formant éjecteur entre ledit conduit de chasse et ladite canalisation de fluide.

Plus particulièrement, un conduit de commande peut être prévu pour commander ladite électrovanne de chasse à partir des moyens d'amenée de fluide hydraulique dans la chambre de combustion ou de pression.

Egalement selon un mode de réalisation de l'invention, le banc d'essai comprend des moyens de détection de fuite.

Il est ainsi possible, à partir d'un certain niveau de fuite caractérisant un début de rupture, de suivre l'évolution de ces fuites jusqu'à ce que la rupture effective se produise.

Ce dispositif consistera, par exemple, à mettre périodiquement en pression, au moins un des circuits, à l'isoler et à contrôler ensuite l'évolution de la pression dans le temps.

Egalement dans un mode de réalisation particulier, le banc selon l'invention comprend au moins un capteur de pression pour mesurer la pression dans chaque chambre de combustion ou de pression.

L'invention a également pour objet un bloc hydraulique pour un banc d'essai tel que décrit ci-dessus, caractérisé par le fait qu'il comprend des perçages d'amenée d'un fluide hydraulique dans la chambre de combustion ou de pression d'une culasse susceptible d'être montée sur le bloc, à partir d'une source de fluide hydraulique à haute pression susceptible d'être raccordée audit bloc, des perçages de retour de fluide depuis la chambre de combustion ou de pression vers la source de fluide hydraulique, et des moyens de montage et de raccordement d'au moins une électrovanne de commande de l'écoulement de fluide hydraulique entre les perçages d'amenée de fluide et les perçages de retour de fluide.

Dans un mode de réalisation particulier, le bloc hydraulique selon l'invention comprend en outre des perçages de fuite calibrée entre l'électrovanne de commande et les perçages de retour de fluide.

Egalement dans un mode de réalisation particulier, le bloc hydraulique selon l'invention comprend en outre des perçages de chasse entre la chambre de combustion ou de pression et les perçages de retour de fluide.

Plus particulièrement, on peut prévoir sur le bloc hydraulique des moyens de montage d'au moins une électrovanne de chasse pour commander l'écoulement de fluide dans les perçages de chasse.

Encore plus particulièrement, le bloc hydraulique selon l'invention peut comprendre des perçages de commande de l'électrovanne de chasse à partir des perçages d'amenée de fluide.

L'invention a également pour objet un procédé de test d'après la revendication 16.

Le procédé selon l'invention peut en outre comprendre une étape de détection de fissure

On décrira maintenant, à titre d'exemple non limitatif, un mode de réalisation particulier de l'invention, en référence aux dessins schématiques annexés dans lesquels :
- la figure 1 est un schéma de principe d'un banc d'essai selon la présente invention ;
- la figure 2 est une vue en coupe de côté du bloc hydraulique de ce banc d'essai ;
- la figure 3 représente en coupe longitudinale une électrovanne susceptible d'être utilisée dans l'invention ;
- la figure 4 est une autre vue en coupe de côté du bloc hydraulique du banc d'essai, illustrant les moyens de chasse ;
- la figure 5 en est une vue en coupe de dessus illustrant les moyens de fuite contrôlée ; et
- la figure 6 est une vue en coupe de côté illustrant le principe d'un pulsateur susceptible d'être utilisé dans l'invention.

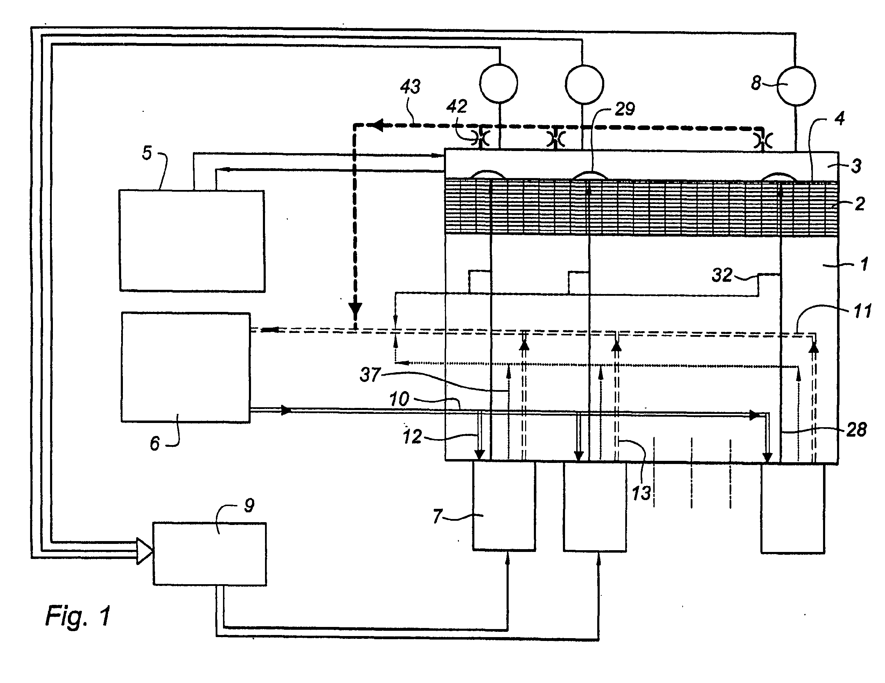

On voit à la figure 1 un banc d'essai de fatigue de culasses comportant de façon connue un bloc hydraulique 1 et une interface 2. La culasse 3 peut être directement montée sur l'interface 2 avec interposition d'un joint de culasse (non représenté) ou avec son bloc moteur.

L'interface 2 se présente sous la forme d'une plaque parallélépipédique dont la face supérieure 4 est usinée au dessin de la culasse étudiée en ce qui concerne notamment l'entraxe des cylindres, les arrivées de circulation d'eau, les logements des vis de fixation et le volume de chambre au point mort haut. Les autres faces de l'interface 2 sont adaptées au dessin du bloc hydraulique de base 1 et à la distribution du fluide caloporteur.

On observera que la culasse , avec ou sans son bloc moteur, est montée sur l'interface 2 de préférence à l'aide des vis d'origine. L'ensemble du dispositif doit en effet reproduire aussi fidèlement que possible les contraintes de serrage dans la culasse telles qu'elles existent dans une culasse montée sur un bloc moteur.

On voit en outre à la figure 1 deux groupes hydrauliques 5 et 6, l'un 5 pour un fluide caloporteur, et l'autre 6 pour le fluide hydraulique de mise en pression. Les deux fluides sont identiques en ce qui concerne leur composition de manière que leur mélange ne gêne pas le fonctionnement du banc lorsque se produisent des fuites préalables à la rupture de la culasse en essai.

Le pilotage en température est bien connu en lui-même dans l'art antérieur et ne sera donc pas décrit plus en détail.

Un certain nombre d'électrovannes 7 de pilotage en pression sont montées sur le bloc hydraulique 1, et des capteurs de pression 8 sont montés sur la culasse ou en tout point convenable du circuit hydraulique. Les capteurs 8 sont reliés à une unité de commande et de détection 9 qui assure le pilotage des électrovannes 7. Le montage des électrovannes 7 sur le bloc 1 est assuré par tous moyens convenables tels que des vis (non représentées).

L'unité de commande et de détection 9 permet également de détecter les fuites dans la culasse à partir des indications fournies par les capteurs 8, et ainsi de détecter des amorces de rupture. L'unité 9 et les capteurs 8 forment donc un système de détection de fissures.

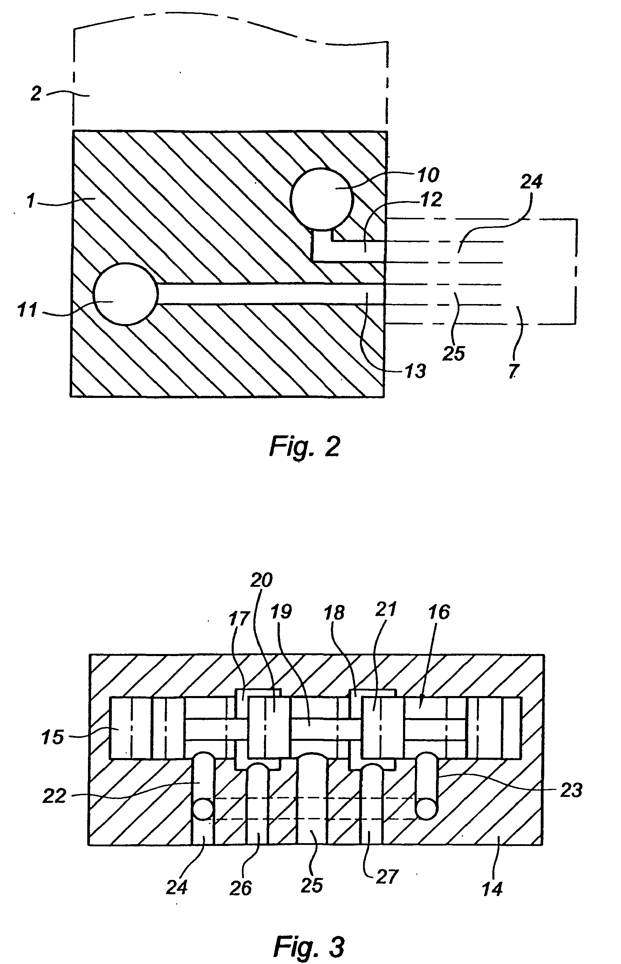

Le bloc hydraulique 1 et l'interface 2 comportent ici six "tranches" identiques de sorte qu'il est possible d'y adapter des culasses de moteurs ayant jusqu'à six cylindres. Les figures 3 à 5 correspondent à une de ces tranches.

Ce banc d'essai peut toutefois recevoir des culasses de moteurs de moins de six cylindres sous réserve de fermer les orifices des tranches non utilisées. Bien entendu, des bancs d'essai selon l'invention pourraient être réalisés pour des culasses de moteur de plus de six cylindres, en augmentant le nombre de tranches correspondantes.

Comme montré en particulier à la figure 2, le bloc hydraulique 1 comporte en premier lieu deux perçages longitudinaux 10 d'amenée de fluide et 11 de retour de fluide, qui traversent l'ensemble des tranches du bloc.

Le perçage 10 est raccordé à la sortie du groupe hydraulique 6 pour alimenter les électrovannes 7 en fluide hydraulique à haute pression. A cet effet, le perçage 10 est également relié aux entrées des électrovannes 7 par l'intermédiaire d'un ensemble de conduits de distribution 12.

Le perçage 11 est raccordé à la bâche du groupe hydraulique 6 pour assurer le retour du fluide hydraulique vers ce groupe, notamment à partir des électrovannes 7. A cet effet, les sorties des électrovannes 7 sont reliées au perçage 11 par un ensemble de conduits collecteurs 13.

La figure 3 montre plus en détail une électrovanne 7 de type connu, susceptible d'être montée sur le bloc hydraulique 1 pour le contrôle de l'écoulement du fluide mis en pression par le groupe hydraulique 6.

Cette électrovanne 7 comporte un corps 14 dans lequel est formé un alésage 15 recevant un tiroir de distribution 16 mobile axialement. L'alésage 15 comporte deux zones de plus grand diamètre formant des chambres 17 et 18 espacées axialement.

Le tiroir de distribution 16 est constitué pour l'essentiel d'une tige 19 et de deux pistons 20 et 21 coaxiaux à cette tige. Les pistons 20 et 21 sont espacés axialement de la même distance que les zones 17 et 18 de l'alésage 15.

Cinq conduits latéraux débouchent dans l'alésage 15 pour le faire communiquer avec l'extérieur.

Deux conduits latéraux 22 et 23 forment deux branches d'un même conduit 24 d'alimentation en fluide hydraulique sous pression. Ces deux conduits 22 et 23 débouchent dans l'alésage axialement à l'extérieur des chambres 17 et 18. Le conduit 24 de chaque électrovanne est raccordé à un des conduits de distribution 12.

Le conduit latéral 25 débouche dans l'alésage entre les chambres 17 et 18. Son autre extrémité est raccordée à un des conduits collecteurs 13.

Les deux derniers conduits latéraux 26 et 27 débouchent chacun dans une des chambres 17 et 18 respectivement. On verra ci-après leurs raccordement au bloc hydraulique 1.

Le tiroir de distribution 16 est déplacé par tout moyen convenable non représenté, à l'aide d'une connexion électrique à l'unité de commande 9. On peut utiliser par exemple le plongeur d'un électroaimant alimenté convenablement, ou un excentrique monté à l'extrémité libre de l'arbre d'un moteur couple. Ces moyens sont bien connus et ne seront donc pas décrits plus en détail.

Lorsque le tiroir de distribution 16 est amené dans sa position représentée en traits pleins à la figure 3, on constate que le conduit 26 est mis en communication avec la haute pression par l'intermédiaire de la chambre 17 et du conduit 22, tandis que le conduit 27 est mis en communication avec le retour de fluide par l'intermédiaire de la chambre 18 et du conduit 25. Inversement, lorsque le tiroir de distribution 16 est amené dans sa position représentée en traits mixtes à la figure 3, le conduit 26 est mis en communication avec le retour de fluide par l'intermédiaire de la chambre 18 et du conduit 25, tandis que le conduit 27 est mis en communication avec la haute pression par l'intermédiaire de la chambre 17 et du conduit 23.

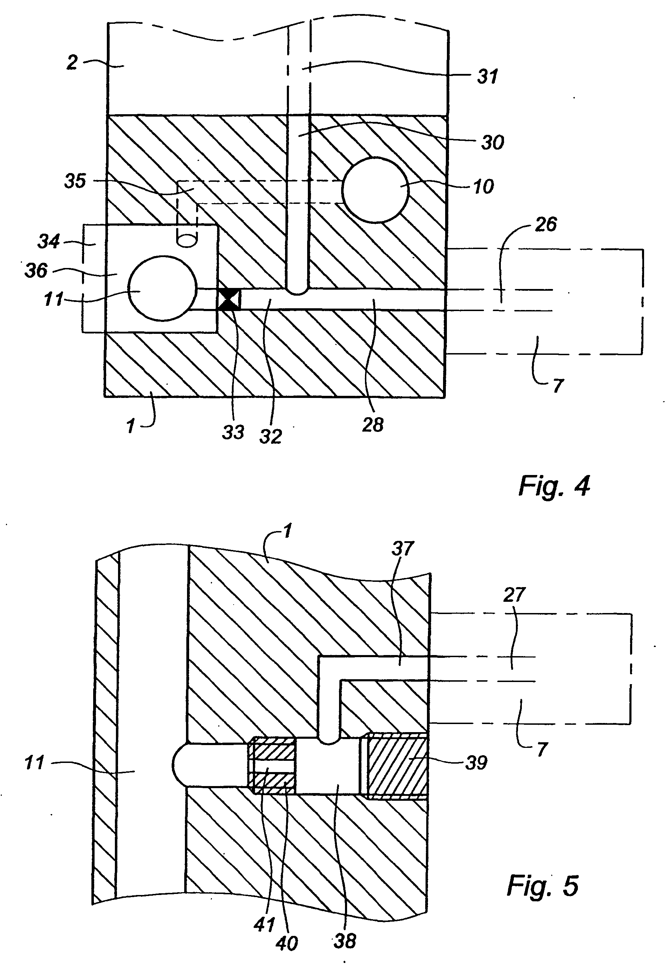

Si l'on se reporte maintenant à la figure 4, on voit dans chaque tranche du bloc hydraulique 1 un conduit 28 d'alimentation en fluide hydraulique de la chambre de combustion ou de pression respective 29 (figure 1) de la culasse 3, raccordé au conduit 26 de l'électrovanne 7. L'alimentation de la chambre se fait à partir du conduit 28 par l'intermédiaire d'un conduit dérivé 30 dans le bloc 1 et d'un conduit de raccordement 31 formé dans l'interface 2.

L'extrémité 32 du conduit d'alimentation 28, au-delà de sa jonction avec le conduit dérivé 30, forme un conduit de chasse qui débouche dans le perçage 11 de retour de fluide par l'intermédiaire d'un clapet de fermeture 33. La commande du clapet 33 est assurée à l'aide d'une électrovanne de chasse 34 actionnée par du fluide à haute pression amené à partir du perçage 10 par l'intermédiaire d'un conduit de commande 35. A cet effet, l'électrovanne 34 est disposée dans un logement 36 ménagé à cheval sur le perçage 11, de manière à permettre son raccordement au conduit 35 tout en permettant l'écoulement du fluide dans le perçage 11.

On se référera maintenant à la figure 5.

Chaque tranche du bloc hydraulique 1 comporte un conduit de fuite 37 raccordé au conduit 27 de l'électrovanne 7. Le conduit 37 débouche dans un perçage 38 débouchant à son tour dans le perçage 11 de retour du fluide hydraulique. Un bouchon 39 est vissé à l'extrémité à l'air libre du perçage 38 pour en assurer une fermeture étanche.

Un organe 40 présentant un orifice calibré 41 est disposé dans le perçage 38 entre le raccord au conduit 37 et le raccord au perçage 11.

Lorsqu'une électrovanne 7 est dans sa configuration représentée en traits pleins à la figure 3, la haute pression est transmise à la chambre de combustion 29 correspondante par l'intermédiaire des conduits 24, 26 et 28. Au contraire, lorsque cette électrovanne 7 est dans sa configuration représentée en traits mixte à la figure 3, la chambre de combustion ou de pression 29 est mise à la pression de retour par l'intermédiaire des conduits 25, 26 et 28.

On comprend donc que chaque chambre de combustion ou de pression 29 est alternativement soumise à la haute pression transmise dans le perçage 10 et à la basse pression du perçage 11 au fur et à mesure des déplacements alternatifs du tiroir de distribution 16 dans l'alésage 15. Ces déplacements sont commandés, selon un programme de pilotage préétabli, par l'unité de commande 9 qui assure également la synchronisation des différentes électrovannes 7 pour simuler des cycles moteurs.

A intervalles choisis, par exemple de l'ordre de l'heure, l'électrovanne 34 est amenée à ouvrir le clapet 33, mettant le conduit 28 à la pression de retour du perçage 11. Il s'ensuit dans le conduit 28 une aspiration de fluide provoquant un écoulement rapide vers le perçage 11, qui entraîne à son tour par effet éjecteur le fluide de la chambre de combustion par les conduits 30 et 31.

On observera de plus à la figure 1 que des restrictions de débit 42 sont formées sur des lignes de fuite 43 des chambres de combustion ou de pression 29 vers la basse pression. Ces lignes de fuite sont ici connectées aux chambres de combustion ou de pression à l'emplacement des injecteurs, et elles permettent d'ajuster une mise en forme des signaux relevés par les capteurs 8.

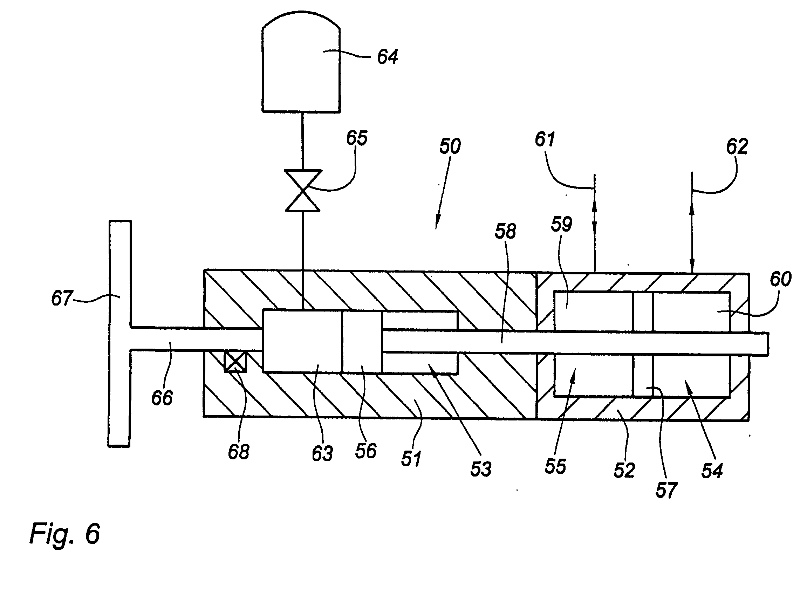

Le pulsateur représenté à la figure 6 comporte d'une manière générale un corps 50 en deux parties 51 et 52 délimitant chacune un logement cylindrique 53 et 54 respectivement.

Un ensemble mobile 55 est constitué par un piston 56 se déplaçant dans le logement 53, un piston 57 se déplaçant dans le logement 54, les pistons 56 et 57 étant reliés par une tige 58.

Le piston 57 divise le logement 54 en deux chambres 59 et 60. Chacune des chambres 59 et 60 est reliée par une ligne 61 et 62 respectivement à une des chambres d'une électrovanne non représentée.

Le piston 56 délimite dans le logement 53, du côté opposé à la tige 58, une chambre 63 reliée à un réservoir 64 de fluide hydraulique par l'intermédiaire d'une vanne 65. La chambre 63 est par ailleurs reliée par un conduit 66 à un autre conduit 67 connecté soit en ligne soit en dérivation aux chambres de pression de la culasse en essai.

Un capteur de pression 68 permet le pilotage de l'électrovanne précitée. La pression dans les chambres de la culasse est ainsi commandée par cette électrovanne, mais par l'intermédiaire du pulsateur.

## Revendications

1. Banc d'essai pour organes de culasse de moteur à combustion interne comportant au moins une chambre de combustion ou de pression (29), ledit banc d'essai comprenant au moins des moyens (10) d'amenée d'un fluide hydraulique dans la chambre de combustion ou de pression, et des moyens de contrôle de la pression de ce fluide de manière à simuler des cycles de pression dans la chambre de combustion ou de pression,
lesdits moyens de contrôle comprenant
au moins une source (6) de fluide hydraulique à haute pression,
au moins une électrovanne (7) par chambre de combustion ou de pression pour alimenter cette chambre de combustion ou de pression en fluide hydraulique à partir de la source à haute pression,
et des moyens de commande (9) pour piloter chaque électrovanne en fonction de la pression dans la chambre de combustion ou de pression et d'une pression de consigne
**caractérisé en ce que** le banc d'essai comprend un bloc hydraulique (1) dans lequel sont ménagées des canalisations (10, 11) formant au moins une partie des moyens d'amenée du fluide hydraulique dans la chambre de combustion ou de pression et des moyens de retour du fluide hydraulique vers la source de fluide hydraulique, ladite au moins une électrovanne (7) étant montée sur ledit bloc hydraulique.

2. Banc d'essai selon la revendication 1 , comprenant des moyens (42, 43) pour créer une première fuite calibrée dans chaque chambre de combustion ou de pression, ladite fuite étant agencée pour mettre en forme le signal détecté par un capteur de pression.

3. Banc d'essai selon la revendication 2, dans lequel lesdits moyens pour créer une première fuite calibrée dans chaque chambre de combustion ou de pression comprennent une restriction de débit (42) entre la chambre de combustion ou de pression (29) et un circuit (11) de retour de fluide hydraulique.

4. Banc d'essai selon la revendication 3, dans lequel ladite restriction de débit entre la chambre de combustion ou de pression et le circuit de retour de fluide hydraulique est montée à l'emplacement de la bougie ou de l'injecteur de carburant dans la culasse.

5. Banc d'essai selon l'une quelconque des revendications 1 à 4, comprenant des moyens (37-41) pour créer une deuxième fuite calibrée dans chaque chambre de combustion ou de pression, ladite fuite étant agencée pour ajuster le gradient de pression dans la chambre de combustion ou de pression lors des phases de décompression des cycles de pression.

6. Banc d'essai selon la revendication 5, dans lequel lesdits moyens pour créer une deuxième fuite calibrée dans chaque chambre de combustion ou de pression comprennent un conduit calibré (41) entre une chambre (18) de l'électrovanne (7) et un circuit (11) de retour de fluide hydraulique.

7. Banc d'essai selon l'ensemble des revendications 1 et 6, dans lequel ledit conduit calibré est formé dans ledit bloc hydraulique (1).

8. Banc d'essai selon l'une quelconque des revendications 1 à 7, comportant un circuit de chasse (32, 33) du fluide hydraulique depuis chaque chambre de combustion ou de pression.

9. Banc d'essai selon la revendication 8, dans lequel le circuit0 de chasse du fluide hydraulique comprend des moyens (30-36) pour créer une dépression dans la chambre de combustion ou de pression.

10. Banc d'essai selon la revendication 9, dans lequel les moyens pour créer une dépression comprennent un conduit de chasse (32) entre la chambre de combustion ou de pression et un circuit de retour (11) de fluide hydraulique.

11. Banc d'essai selon l'ensemble des revendications 1 et 10, dans lequel ledit conduit de chasse est formé dans ledit bloc hydraulique (1).

12. Banc d'essai selon l'une quelconque des revendications 10 et 11, comportant une canalisation de fluide (28, 32) entre une chambre (17) de l'électrovanne et un circuit (11) de retour de fluide hydraulique, une électrovanne de chasse (34), et un raccord (30, 32) formant éjecteur entre ledit conduit de chasse et ladite canalisation de fluide.

13. Banc d'essai selon la revendication 12, comprenant un conduit (35) de commande de ladite électrovanne de chasse (34) à partir des moyens d'amenée (10) de fluide hydraulique dans la chambre de combustion ou de pression.

14. Banc d'essai selon l'une quelconque des revendications 1 à 13, comprenant des moyens (9) de détection de fuite.

15. Banc d'essai selon l'une quelconque des revendications 1 à 14, comprenant au moins un capteur de pression (8) pour mesurer la pression dans chaque chambre de combustion ou de pression.

16. Procédé de test d'un organe de culasse de moteur à combustion interne comprenant au moins une chambre de combustion ou de pression (29), comportant les étapes consistant à amener un fluide hydraulique dans la chambre de combustion ou de pression, à contrôler la pression de ce fluide de manière à simuler des cycles de pression dans la chambre de combustion ou de pression,
à établir un programme d'évolution d'une pression de consigne dans les chambres de combustion ou de pression,
à mesurer la pression dans chaque chambre de combustion ou de pression, et
à piloter au moins une électrovanne (7) par chambre de combustion ou de pression, agencée pour contrôler la pression du fluide hydraulique dans la chambre de combustion ou de pression, de manière à asservir la pression mesurée à la pression de consigne,
**caractérisé en ce que** le procédé, comprend au moins une étape de chasse du fluide hydraulique depuis la chambre de combustion ou de pression.

17. Procédé selon la revendication 16 comprenant une étape de détection de fissure.

## Claims

1. A test bench for cylinder head members of an internal combustion engine including at least one combustion or pressure chamber (29), said test bench comprising at least means (10) for introducing a hydraulic fluid into the combustion or pressure chamber, and means for controlling the pressure of this fluid so as to simulate pressure cycles in the combustion or pressure chamber,
said control means comprise
at least one source (6) of high pressure hydraulic fluid,
at least one solenoid valve (7) per combustion or pressure chamber in order to feed this combustion or pressure chamber with hydraulic fluid from the high pressure source,
and control means (9) for controlling each solenoid valve depending on the pressure in the combustion or pressure chamber and on a set pressure value,
**characterized in that** the test bench comprises a hydraulic block (1) in which ducts (10, 11) are laid out, forming at least one portion of the means for introducing the hydraulic fluid into the combustion or pressure chamber and means for returning the hydraulic fluid towards the hydraulic fluid source, said at least one solenoid valve (7) being mounted on said hydraulic block.

2. The test bench according to claim 1 comprising means (42, 43) for generating a first calibrated leak in each combustion or pressure chamber, said leak being arranged so as to shape the signal detected by a pressure sensor.

3. The test bench according to claim 2, wherein said means for generating a first calibrated leak in each combustion or pressure chamber comprise a flow rate restrictor (42) between the combustion or pressure chamber (29) and a circuit (11) for returning hydraulic fluid.

4. The test bench according to claim 3 wherein said flow rate restrictor between the combustion or pressure chamber and the circuit for returning hydraulic fluid is mounted in the location of the spark plug or of the fuel injector in the cylinder head.

5. The test bench according to any of claims 1 to 4, comprising means (37-41) for generating a second calibrated leak in each combustion or pressure chamber, said leak being arranged in order to adjust the pressure gradient in the combustion or pressure chamber during decompression phases of the pressure cycles.

6. The test bench according to claim 5, wherein said means for generating a second calibrated leak in each combustion or pressure chamber comprise a calibrated conduit (41) between a chamber (18) of the solenoid valve (7) and a circuit (11) for returning hydraulic fluid.

7. The test bench according to the whole of claims 1 and 6 wherein said calibrated conduit is formed in said hydraulic block (1).

8. The test bench according to any of claims 1 to 7, including a circuit (32, 33) for flushing away the hydraulic fluid from each combustion or pressure chamber.

9. The test bench according to claim 8, wherein the hydraulic fluid flushing circuit comprises means (30-36) for generating a vacuum pressure in the combustion or pressure chamber.

10. The test bench according to claim 9, wherein the means for generating a vacuum pressure comprise a flushing conduit (32) between the combustion or pressure chamber and a circuit (11) for returning hydraulic fluid.

11. The test bench according to the whole of claims 1 and 10, wherein said flushing conduit is formed in said hydraulic block (1).

12. The test bench according to any of claims 10 and 11, including a fluid duct (28, 32) between a chamber (17) of the solenoid valve and a circuit (11) for returning hydraulic fluid, a flushing solenoid valve (34), and a coupling (30, 32) forming an ejector between said flushing conduit and said fluid duct.

13. The test bench according to claim 12, comprising a conduit (35) for controlling said flushing solenoid valve (34) from means (10) for introducing hydraulic fluid into the combustion or pressure chamber.

14. The test bench according to any of claims 1 to 13, comprising leak detection means (9).

15. The test bench according to any of claims 1 to 14, comprising at least one pressure sensor (8) for measuring pressure in each combustion or pressure chamber.

16. A method for testing a cylinder head member of an internal combustion engine comprising at least one combustion or pressure chamber (29), including steps consisting of introducing a hydraulic fluid in the combustion or pressure chamber, of controlling the pressure of this fluid so as to simulate pressure cycles in the combustion or pressure chamber,
establishing a program for changing a set pressure value in the combustion or pressure chambers,
measuring the pressure in each combustion or pressure chamber, and
controlling at least one solenoid valve (7) per combustion or pressure chamber, arranged for controlling the pressure of the hydraulic fluid in the combustion or pressure chamber, so that the measured pressure is under the control of the set pressure value,
**characterized in that** the method comprises at least one step for flushing away the hydraulic fluid from the combustion or pressure chamber.

17. The method according to claim 16, comprising a crack detection step.

## Patentansprüche

1. Prüfbank für VerbrennungsmotorenZylinderkopforgane, mindestens eine Verbrennungs- oder Druckkammer (29) umfassend, wobei die Prüfbank mindestens Mittel (10) zur Zuleitung eines Hydraulikfluids in die Verbrennungs- oder Druckkammer umfasst, und Mittel zur Steuerung des Drucks dieses Fluids, um Druckzyklen in der Verbrennungs- oder Druckkammer zu simulieren,
wobei die Steuermittel umfassen
mindestens eine Quelle (6) für Hochdruck-Hydraulikfluid,
mindestens ein Elektroventil (7) je Verbrennungs-oder Druckkammer, um diese Verbrennungs- oder Druckkammer mit Hydraulikfluid ab der Hochdruckquelle zu versorgen,
und Steuermittel (9), um jedes Elektroventil in Abhängigkeit vom Druck in der Verbrennungs- oder Druckkammer und eines Solldrucks zu steuern,
**dadurch gekennzeichnet, dass** die Prüfbank einen Hydraulikblock (1) umfasst, in den Kanalisationen (10, 11) eingearbeitet sind, die mindestens einen Teil der Mittel zur Zuleitung des Hydraulikfluids in die Verbrennungs- oder Druckkammer bilden und Mittel für den Rücklauf des Hydraulikfluids zur Hydraulikfluidquelle, wobei das mindestens eine Elektroventil (7) auf dem Hydraulikblock befestigt ist.

2. Prüfbank nach Anspruch 1, Mittel (42, 43) zur Bildung einer ersten kalibrierten Leckage in jeder Verbrennungs- oder Druckkammer umfassend, wobei die Leckage derart ausgebildet ist, um das von einem Drucksensor festgestellte Signal in Form zu bringen.

3. Prüfbank nach Anspruch 2, wobei die Mittel zur Bildung einer ersten kalibrierten Leckage in jeder Verbrennungs- oder Druckkammer eine Durchflussbegrenzung (42) zwischen der Verbrennungs-oder Druckkammer (29) und einem Kreis (11) für den Rücklauf von Hydraulikfluid umfassen.

4. Prüfbank nach Anspruch 3, wobei die Durchflussbegrenzung zwischen der Verbrennungs- oder Druckkammer und dem Rücklaufkreis für das Hydraulikfluid an der Stelle der Kerze oder der Kraftstoffeinspritzung in den Zylinderkopf befestigt ist.

5. Prüfbank nach einem der Ansprüche 1 bis 4, Mittel (37-41) zur Bildung einer zweiten kalibrierten Leckage in jeder Verbrennungs- oder Druckkammer umfassend, wobei die Leckage derart ausgebildet ist, um den Druckgradienten in der Verbrennungs- oder Druckkammer während der Dekompressionsphasen der Druckzyklen einzustellen.

6. Prüfbank nach Anspruch 5, wobei die Mittel zur Bildung einer zweiten kalibrierten Leckage in jeder Verbrennungs- oder Druckkammer eine kalibrierte Leitung (41) zwischen einer Kammer (18) des Elektroventils (7) und einem Kreis (11) für den Rücklauf von Hydraulikfluid umfassen.

7. Prüfbank nach allen Ansprüchen 1 und 6, wobei die kalibrierte Leitung im Hydraulikblock (1) ausgebildet ist.

8. Prüfbank nach einem der Ansprüche 1 bis 7, die einen Kreis zum Spülen (32, 33) des Hydraulikfluids aus der Verbrennungs- oder Druckkammer umfasst.

9. Prüfbank nach Anspruch 8, wobei der Kreis zum Spülen des Hydraulikfluids Mittel (30-36) zur Bildung eines Unterdrucks in der Verbrennungs- oder Druckkammer umfasst.

10. Prüfbank nach Anspruch 9, wobei die Mittel zur Bildung eines Unterdrucks eine Spülleitung (32) zwischen der Verbrennungs- oder Druckkammer und einen Kreis (11) für den Rücklauf von Hydraulikfluid umfassen.

11. Prüfbank nach allen Ansprüchen 1 bis 10,
wobei der Spülkreis im Hydraulikblock (1) ausgebildet ist.

12. Prüfbank nach einem der Ansprüche 10 und 11, die eine Fluidkanalisation (28, 32) zwischen einer Kammer (17) des Elektroventils und einem Kreis (11) für den Rücklauf von Hydraulikfluid, ein Spül-Elektroventil (34) und eine Verbindung (30, 32) umfasst, die zwischen der Spülleitung und der Fluidkanalisation einen Auswerfer bildet.

13. Prüfbank nach Anspruch 12, die eine Leitung (35) zur Steuerung des Spül-Elektroventils (34) ab den Zuleitungsmitteln (10) von Hydraulikfluid in die Verbrennungs- oder Druckkammer umfasst.

14. Prüfbank nach einem der Ansprüche 1 bis 13, die Mittel (9) zur Leckagefeststellung umfasst.

15. Prüfbank nach einem der Ansprüche 1 bis 14, die mindestens einen Drucksensor (8) zum Messen des Drucks in jeder Verbrennungs- oder Druckkammer umfasst.

16. Testverfahren für ein Verbrennungsmotoren-Zylinderkopforgan, mindestens eine Verbrennungs- oder Druckkammer (29) umfassend, das die Schritte umfasst, die darin bestehen, ein Hydraulikfluid in die Verbrennungs- oder Druckkammer zu führen, den Druck dieses Fluids durch Simulation von Druckzyklen in der Verbrennungs- oder Druckkammer zu steuern,
ein Programm zum Aufbau eines Solldrucks in den Verbrennungs- oder Druckkammern zu entwickeln,
den Druck in jeder Verbrennungs- oder Druckkammer zu messen und
mindestens ein Elektroventil (7) je Verbrennungs- oder Druckkammer zu überwachen, das ausgebildet ist, um den Druck des Hydraulikfluids in der Verbrennungs- oder Druckkammer derart zu steuern, dass der gemessene Druck dem Solldruck unterworfen ist,
**dadurch gekennzeichnet, dass** das Verfahren mindestens einen Schritt des Spülens des Hydraulikfuids ab der Verbrennungs- oder Druckkammer umfasst.

17. Verfahren nach Anspruch 16, das einen Schritt der Rissfeststellung umfasst.
